# EUROPÄISCHE PATENTSCHRIFT

(11) **EP 0 754 740 B1**
(45) Veröffentlichungstag und Bekanntmachung des Hinweises auf die Patenterteilung: **21.11.2001**
(21) Anmeldenummer: 96111422.0
(22) Anmeldetag: 16.07.1996
(51) Int. Cl.: C09D 175/04, C08J 7/04, C09D 5/36, C08J 5/12

(54) **Mit Lack beschichtete Polymerfolie und Verfahren zum Aufbringen der beschichteten Polymerfolie auf Formkörper**
Polymer film coated with lacquer and process for applying the coated polymer film on moulded articles
Film en polymère revêtu d'un vernis et procédé d'application du film en polymère revêtu sur des pièces moulées

(30) Priorität: 20.07.1995 DE 19526478
(43) Veröffentlichungstag der Anmeldung: 22.01.1997
(73) Patentinhaber: E.I. DU PONT DE NEMOURS AND COMPANY, Wilmington Delaware 19898 (US)
(72) Erfinder: Gruner, Christian, Dr., 50354 Hürth (DE); Schmitt, Reinhart, Dr., 53332 Bornheim (DE); Patzschke, Hans-Peter, Dr., 42279 Wuppertal (DE)
(74) Vertreter: Gille Hrabal Struck Neidlein Prop Roos

(56) Entgegenhaltungen:
- EP-A- 0 251 546
- EP-A- 0 422 357
- EP-A- 0 584 818
- EP-B- 0 352 298
- DE-A- 4 025 264

## Beschreibung

Die Erfindung betrifft eine Polymerfolie, die mit einem Lack beschichtet worden ist, der Bindemittel, Effektpigment, organisches Lösemittel und Wasser enthält, und ein Verfahren zum Aufbringen der beschichteten Polymerfolie auf Formkörper.

In der Autoindustrie werden zunehmend Formteile auf Kunststoffbasis verwendet, die zusammen mit Metallteilen eingesetzt werden sollen und einer Lackierung bedürfen. Derartige Kunststofformteile bestehen aus Polypropylen oder anderen Thermoplasten oder Duromeren und können mit Uni- und Effektfarbtönen mit und ohne Vorbehandlung beschichtet werden. Darüber hinaus gibt es die Möglichkeit, Kunststoffteile nicht direkt mit Lacken zu beschichten, sondern mit lackbeschichteten Trägerfolien zu überziehen. Die beschichteten Trägerfolien werden durch Verformung unter Anwendung von Wärme und/oder Vakuum auf die Kraftfahrzeugteile aufgebracht.

Derartige Verfahren zur Herstellung von Kraftfahrzeuginnenteilen sind bereits im Einsatz. Bei Verwendung üblicher Effektlacksysteme für Kraftfahrzeugkarossen in Außenfarben resultieren visuelle Störungen in der Gleichmäßigkeit der Effektbeschichtung sowie bei den angewendeten Dehnungen Risse im Lack, die sich in der verwendeten Folie unter Zerreißen derselben fortsetzen. Dies läßt sich umgehen, indem die beschichtete Folie auf hohe Temperaturen erhitzt wird, wobei als Mindesttemperatur 145°C genannt sind, wodurch der Lackfilm im Moment des Verformens hinreichend fließfähig wird. Diese Verfahren sind in EP-A-0 251 546 B1 und EP-A-0 261 815 B1 beschrieben, wobei als Folie Polyester- oder Polyurethanfolien, als Lack ein handelsüblicher Lösemittellack (Durethane 101, PPG Industries) und als Kleber ein handelsüblicher Acrylkleber verwendet wird. Nachteilig ist, daß sich bei den ausgenutzten Fließvorgängen die Lage von plättchenförmigen Effektpigmenten zueinander sowie ihre geometrische Ausrichtung innerhalb der Effektlackschicht derart ändern, daß das gleichmäßige Aussehen der Effektlackschicht beeinträchtigt wird, während bei Uni-Lacken keine Störungen auftreten. Aufgrund der hohen Temperaturen lassen sich auch viele interessante Polymere als Folienmaterialien nicht verwenden, da der für Umformungsvorgänge optimale Temperaturbereich mit Reißdehnuncismaximum bei Thermoplasten bzw. der Kristallitschmelzbereich teilkristalliner Polymere bereits überschritten werden. Die hohen Verformungstemperaturen machen auch den Verformungsprozeß bei unterschiedlichen Temperaturen im Produktionsbereich störanfällig.

EP-A-0 441 888 beansprucht ein Verfahren, bei dem 2-Effektlackschichten mit verschieden großen Effektpigmenten auf Polymerträgerfolien aufgebracht werden, wobei diese Schichten zusammen optisch besonders attraktive Effektbeschichtungen ergeben. Mit diesem System können Folien zur Wärmeverformung beschichtet werden, wenn die Schmelztemperatur der blättchenförmigen Effektpigmente um 5°C bis 50°C höher als die Temperatur der Wärmeverformung ist. Daher sind hohe Verformungstemperaturen notwendig, oder es müssen niedrigschmelzende Effektpigmente verwendet werden. Zudem müssen zwei Schichten effektpigmenthaltige Lacke aufgebracht werden.

Ein grundsätzliches Problem ist, daß bei plastischen Fließvorgängen bei der Verformung die Positionierung der Effektpigmente entsprechend dem Fließen des Folienmaterials in unregelmäßiger Weise verändert wird und somit das gleichmäßige Aussehen der verformten Folie beeinträchtigt ist und optische Störungen wie schlierenartige Erscheinungen auftreten. Allerdings zeigen auch Versuche mit elastomeren dünnschichtigen Substraten, daß bei Verformungen Risse und Ablösungen von aufgebrachten Beschichtungen auftreten und somit keine effektbeschichteten Formteile hergestellt werden können.

EP-A-0 352 298 B1 beschreibt ein Verfahren, bei dem Fluorpolymere als Bindemittel für Lacke zur Beschichtung von Folien verwendet werden, die zunächst in die endgültige Geometrie thermoverformt werden und anschließend rückseitig mit Kunststofformmasse im Spritzgußverfahren hinterfüllt werden. Nachteil hierbei ist, daß zwei Arbeitsgänge nötig sind, um die Folie zu verformen und auf dem Trägerkunststoff zu verankern und daß Fluorpolymere teure und problematische Stoffe sind.

EP-A-0 422 357 beschreibt pigment haltige Polyester urethan - Zusammensetzungen auf wasser basis, die Melaminharze enthalten Können. Diese Zusammensetzungen werden zur Beschichtung von Metallen oder Kunststoffen eingesetzt.

Es ist Aufgabe der vorliegenden Erfindung, eine mit einem Lack beschichtete Polymerfolie anzugeben, die nachträglich verformt werden kann. Der Lack soll auf der Folie gut haften, einen guten Flop-Effekt ermöglichen und eine Dehnung der mit ihm beschichteten Folie ohne Beschädigung bzw. ohne Beeinträchtigung des Erscheinungsbildes des Lackes auch bei starken Dehnungen der beschichteten Folie ermöglichen.

Überraschenderweise wurde gefunden, daß die vorgenannten Aufgaben gelöst werden können durch eine Polymerfolie, die mit einem Lack beschichtet ist, der eine Bindemittelkombination auf der Basis eines elastischen Polyurethanharzes und eines harten Melaminharzes enthält und dessen elastisch-plastisches Verhalten durch Variation des Verhältnisses der genannten Bindemittelkomponenten an die Eigenschaften der zu beschichtenden Polymerfolie angepaßt werden kann.

Gegenstand der Erfindung ist daher eine Polymerfolie der eingangs genannten Art, die dadurch gekennzeichnet ist, daß der Lack
18 bis 45 Gew.-% einer Bindemittelkombination,
0,1 bis 10 Gew.-% plättchenförmiges Aluminium- und/oder Glimmereffektpigment,
0 bis 15 Gew.-% Farbpigment,
3 bis 20 Gew.-% organische Lösemittel und
50 bis 76,9 Gew.-% Wasser enthält,
wobei die Summe der Bestandteile 100 Gew.-% beträgt und wobei die Bindemittelkombination
A) 10 bis 70 Gew.-% Polyurethanharz,
B) 5 bis 40 Gew.-% Melaminharz,
C) 0 bis 60 Gew.-% weitere Bindemittel und
D) 0 bis 6 Gew.-% Verdicker enthält,
wobei die Summe der Komponenten A) bis D) 100 Gew.-% beträgt.

Der Verdicker ist vorteilhaft ein Acrylharz- oder ein Polyvinylalkoholverdicker, und vorteilhaft beträgt der Anteil des Verdickers an der Bindemittelkombination 0,1 bis 3 Gew.-%.

Der Lack kann weitere übliche Additive enthalten, soweit diese seine Verwendung für nachträglich zu verformende Polymerfolien nicht beeinträchtigen.

Die Trockenfilmstärke der Lackschicht beträgt vorteilhaft 8 bis 25 *µ*m, wobei in der Regel ein zusätzlicher Klarlack mit einer Trockenfilmstärke von 20 bis 50 *µ*m aufgebracht wird.

Die Erfindung betrifft auch Verfahren zum Aufbringen der beschichteten Folie auf Kunststoff-Formkörper. Die Folie kann manuell oder im Vakuumtiefziehverfahren unter Verwendung eines Klebstofs auf den Formkörper aufgeklebt werden. Es ist auch möglich, die Polymerfolie unter Verwendung einer Form mit einer Kunststoff-Formmasse zu hinterfüllen. In diesem Fall ist in der Regel die Anwendung eines Klebstoffs nicht erforderlich.

Der Basislack kann je nach zu beschichtender Folie und damit je nach erforderlichem elastisch-plastischem Verhalten durch Variation des Verhältnisses der elastischen Bindemittelkomponente A und der harten Komponente B und gegebenenfalls C in den angegebenen Bereichen formuliert werden. Dies kann derart geschehen, daß Formulierungen mit verschiedenen Mischungsverhältnissen zwischen den Komponenten A) und B) daraufhin getestet werden, ob der damit erstellte Lackaufbau in Verbindung mit der zu beschichtenden Folie in einer Prüfung nach DIN-IS0 1520 bei 21°C bis 23°C 20 bis 55 % elastische und 80 bis 45 % plastische Verformung aufweist. Darunter soll verstanden werden, daß bei einer Verformung von 10 mm Tiefe und anschließender Entlastung eine Verformung von 4,5 bis 8 mm zurückbleibt, ohne daß sich Risse gebildet haben und somit 20 bis 55 % der Verformung elastischen Charakter hatten. Es sei dabei angemerkt, daß die genannten Kriterien für die Verformung bei Raumtemperatur gelten und so in einfacher Weise die Anpassung von Lack und Folie erlauben. Bei der Anwendung des Verfahrens können aufgrund der höheren Umformtemperaturen höhere plastische Verformungsteile auftreten.

Es ist ein wesentliches Markmal der vorliegenden Erfindung, daß durch das Mengenverhältnis der Komponenten A, B und C die Härte und die Elastizität des Lacks so an die zum Einsatz kommende Folie angepaßt werden können, daß die fertig beschichtete Folie die-oben angegebenen Werte der elastischen und plastischen Verformung aufweist. Mit Hilfe der beschriebenen Tiefungsprüfung kann leicht festgestellt werden, ob der Lack zur Beschichtung der jeweiligen Folie geeignet ist.

Der Basislack wird gegebenenfalls mit einem Klarlack beschichtet und anschließend wird die beschichtete Folie auf das Kunststoffsubstrat aufgebracht durch Verformung unter Wärme und/oder Vakuum, wobei Dehnungen von mehr als 10 % und/oder Biegungen um Biegeradien von 300 mm oder kleiner auftreten können.

Die wasserverdünnbare Polyurethanharzkomponente wird hergestellt aus einem isocyanathaltigen Prepolymer, das nach Neutralisation mit tertiären Aminen in eine wäßrige Phase überführt wird und anschließend sofort mit Wasser, Polyolen, Polyaminen oder Polyhydrazinen kettenverlängert werden kann. Das NCO-Prepolymer entsteht aus der Umsetzung von
a. einem linearen Polyether- und/oder Polyesterdiol mit einer Molmasse von 600 bis 6000,
b. niedermolekularen Verbindungen, die zwei gegenüber Isocyanaten reaktive Gruppen enthalten, wobei mindestens ein Teil von ihnen eine zur Anionenbildung befähigte Gruppe aufweist und
c. gegebenenfalls kleinen Anteilen von mehr als zwei hydroxylgruppenenthaltenden Polyolen mit Diisocyanaten.

Die Umsetzung des NCO-Prepolymeren erfolgt dabei so, daß auf 1 Äquivalent OH-Gruppen 1,01 bis 1,5 Äquivalente NCO-Gruppen entfallen. Das Molekulargewicht der kettenverlängerten Polyurethan-Dispersion liegt zwischen Mn 50000 bis 150000, gemessen mit Gelpermeations-Chromatographie im Vergleich zum Styrol-Standard. Die Umsetzung der Komponenten a, b und c erfolgt nach den gutbekannten Verfahren der Polyurethan-Chemie, wobei die Umsetzung entweder im Gemisch oder auch stufenweise erfolgen kann.

Als Polyether-und/oder Polyesterdiole sind die in der Polyurethan-Chemie üblichen Verbindungen einsetzbar.

Verbindungen mit anionischen oder in anionische Gruppen überführbaren Gruppen enthalten mit Isocyanaten reaktive Gruppen wie OH, SH und NH₂ und zur Ionenbildung geeignete Grupen sind saure Gruppen wie Carboxyl-, Phosphonsäure- und Sulfonsäuregruppen einsetzbar. Beispiele für derartige Verbindungen sind Dimethylolalkylmonocarbonsäure wie beispielsweise Dimethylolpropionsäure und Dimethylolbuttersäure.

Als Isocyanat können für die Herstellung des Polyurethans beliebige organische Polyisocyanate, insbesondere Diisocyanate, gegebenenfalls auch Gemische, eingesetzt werden. Dabei können die üblichen, auf dem Lacksektor bekannten Diisocyanate verwendet werden. Geeignete Diisocyanate sind aliphatische, araliphatische und aromatische Diisocyanate, wie z.B. Toluylendiisocyanat, Tetramethylxylylen-diisocyanat, Isophorondiisocyanat oder Hexandiisocyanat.

Die Umsetzung kann lösemittelfrei durchgeführt werden, erfolgt aber bevorzugt in Lösemitteln, die gegenüber NCO-Gruppen inert und mit Wasser mischbar sind. Vorteilhaft werden Lösemittel eingesetzt, die neben den oben beschriebenen Eigenschaften auch noch gute Löser für die Dimethylolpropionsäure und für die hergestellten Polyurethane sind und die sich aus wäßrigen Mischungen leicht abtrennen lassen. Besonders gut geeignete Lösemittel sind Aceton und Methylethylketon sowie N-Methylpyrrolidon. Neben diesen üblicherweise eingesetzten Verfahren zur Herstellung von Polyurethan-Dispersionen sind weitere Verfahrensvarianten möglich, z.B. die Kettenverlängerung mit Polyolen oder Wasser in der organischen Phase, Neutralisation des OH-gruppenhaltigen Polyurethan-Bindemittels, Dispergierung in Wasser und Abdestillieren der organischen Lösemittel. Erfolgt die Umsetzung von a, b und c in einem Äquivalentverhältnis von 1.01 bis 1,5 Äquivalente OH zu 1 Äquivalente NCO, so bilden sich OH-gruppenhaltige Prepolymere, die mit Polyisocyanaten in organischer Phase oder in wäßriger Emulsion kettenverlängert werden können. Baut man in die Polyurethan-Dispersion ungesättigte Doppelbindungen ein, so können sie mit Acryl- bzw. Methacrylsäureestern verschiedener Kettenlänge oder auch Styrol in wäßriger Phase copolymerisiert werden. Auf diese Weise entstehen acrylierte Polyurethan-Dispersionen.

Nach Herstellen der wäßrigen Polyurethan-Dispersion nach den bekannten Verfahren werden dieser zur Herstellung des Metalleffektbasislackes die weiteren Komponenten, wie weitere Bindemittel, Effekt-Pigmente, Additive sowie organische Lösemittel und Wasser zugeführt.

Zusätzliche Bindemittel können wasserverdünnbare Polyesterharze, Polyacrylharze, acrylierte Polyester- oder Polyurethanharze sein sowie insbesondere Melaminharze.

Als Effektpigmente sind Aluminiumbronze- und Micapigmente einsetzbar. Die Menge beträgt zwischen 0,1 bis 10 Gew.-%, bezogen auf den Lack. Die Effektpigmente können auch zusammen mit einem oder mehreren weiteren Nichtmetallic-Pigmenten oder -Farbstoffen eingesetzt werden.

Geeignete Farbpigmente sind übliche organische und/oder anorganische transparente oder deckende Pigmente, wie sie beispielsweise in der Deutschen Norm DIN 55 944 beschrieben sind. Hierunter fallen z.B. Phthalocyanine, Indanthrene, Thioindigopigmente, Ruß, Titandioxid, Eisenoxid sowie gegebenenfalls auch Füllstoffe, wie Kieselsäuretalkum oder Schichtsilikate.

Weiterhin kann der Lack lacktechnische Additive enthalten, beispielsweise rheologiebeeinflussende Mittel, wie hochdisperse Kieselsäure, Schichtsilikate oder polymere Harnstoffverbindungen sowie Verdicker, wie beispielsweise Cellulose, Ether oder Ester. Auch Antiabsetzmittel, Verlaufsmittel, Lichtschutzmittel, Antischaummittel sowie Netzmittel können eingesetzt werden. Gegeberenfalls sind auch saure basische und/oder metallische Katalysatoren zur beschleunigten Härtung einsetzbar.

Als Lösemittel sind übliche lacktechnische Lösemittel geeignet, welche von der Herstellung der Bindemittel stammen oder separat zugegeben werden können. Beispiele sind Alkohole, Glykolether, Ketone und/oder aromatische oder aliphatische Kohlenwasserstoffe.

Der erfindungsgemäße Lack wird nach bekannten und in der Literatur beschriebenen Methoden hergestellt. Insbesondere sind die eingesetzten Bindemittel geeignet für die Herstellung von wäßrigen Effektbasislacken für die Beschichtung von Folien für Kunststofformkörper. Dabei erfolgt die Applikation des erfindungsgemäßen Lacks auf die Folie durch Spritzen, insbesondere durch Zerstäuben mittels Rotationskräften und/oder Druckluft. Danach werden die Filme an der Luft oder mit Wärme getrocknet unter Entfernung der flüchtigen Bestandteile.

Der auf die Trägerfolie aufgebrachte erfindungsgemäße Effektbasislack kann mit einem Klarlack beschichtet werden. Dieser kann beispielsweise auf Polyesterkondensat basieren. Der Klarlack kann geringe Mengen von UV-Absorbern, beispielsweise 0,1 bis 2 Gew.-% enthalten. Beispiel für UV-Absorber ist das Handelsprodukt Tinuvin 328 (Ciba-Geigy).

Vor Auftragen des erfindungsgemäßen Effektbasislackes kann die Trägerfolie vorbehandelt werden mit für die Kunststoffbeschichtung üblichen Vorbehandlungsmethoden. Bevorzugt wird dazu die sogenannte Corona-Entladungsmethode eingesetzt. Darüber hinaus kann vor Auftrag des erfindungsgemäßen Effektbasislackes eine Beschichtung mit handelsübichen elastischen 1K- oder 2K-Primern erfolgen. Das sind beispielsweise Verbindungen, die auf chlorierten Polyolefinen basieren.

Die Trägerfolie besteht aus einem für den Thermoverformungsprozeß geeigneten halbelastischen, dünnen Material mit geeigneten Dehnungseigenschaften, z.B. das Handelsprodukt Hostaprop bzw. HifaxCA 10A (Handelsprodukt der Firmen Hoechst AG/Frankfurt bzw. Montell GmbH/Bayreuth). Bevorzugt besteht die Trägerfolie aus ganz oder teilweise thermoplastischem olefinischem Material, hergestellt durch Polymerisation von Olefinen wie Ethylen, Propylen, Butadien und ähnlichen. Es können aber auch andere Polymerfolien verwendet werden wie Polyesterfolien, sofern diese im Verbundsystem mit dem Lack das bei der Beschreibung des Lacksystems genannte Kriterium erfüllen. Derartige Folien sollten bevorzugt bei einer Prüftemperatur von 21°C ca. 30 bis 40 % elastische und 60 bis 70 % plastische Verformungsanteile aufweisen. Bei höheren Verformungstemperaturen ist es besonders günstig, wenn das polymere Folienmaterial teilvernetzte elastomere Anteile enthält; solche Materialien sind teilvernetzte Ethylen-Propylen Kautschuke, die gegebenenfalls auch Butadienanteile enthalten.

Die Trägerfolie kann gegebenenfalls weitere Folienschichten aufweisen. Die Stärke des Materials ist so gewählt, daß es für eine Thermoverformung in eine dreidimensionale Form geeignet ist. So kann die Dicke beispielsweise 0,1 mm bis 0,7 mm betragen. Dabei wird die beschichtete Folie unter Verformung und Anwendung von Wärme und/oder Vakuum um den Kunststofformkörper bezogen nach allgemein bekannten Methoden. Die geeigneten Verformungstechniken entsprechen dem bekannten Stand der Technik, wobei sowohl Luftdruckunterschiede als auch Stempel die Verformung bewirken können und das mit der Folie zu überziehende Formteil selbst als Stempel bzw. Form eingesetzt werden kann. Bevorzugt wird die Folie vor der Verformung mit Umluft, Infrarotstrahlen oder durch andere Medien erwärmt. Es ist aber auch möglich, bei nicht zu stark dreidimensional ausgebildeten Geometrien kaltes Verstrecken anzuwenden, wobei aber durch gleichzeitiges Aufziehen auf das Formteil Rückstellvorgänge aufgrund mangelnden plastischen Verhaltens vermieden werden müssen. Die Verformungstemperatur ist unter anderem abhängig von der Natur des Beschichtungsmaterials.

Nach erfolgter Beschichtung der Trägerfolie mit dem Effektbasislack und gegebenenfalls dem Klarlack erfolgt das Aufbringen der beschichteten Folie auf einen Kunststofformkörper.

Die Folie wird dabei erfindungsgemäß derart gestreckt, daß sowohl ein plastisches Fließen als auch eine elastische Verformung stattfindet und keinesfalls eine Verformung durch Verflüssigung auftritt, da dabei die gleichmäßige Anordnung der Effektpigmente gestört wird und schlierenartige Erscheinungen auftreten.

Die unbeschichtete Unterseite der Folie kann mit einer druckempfindlichen Klebeschicht versehen sein, so daß eine gute Haftung zwischen Folie und Kunststofformkörper ermöglicht wird. Als Klebematerialien können die für Kunststoffverklebungen üblichen Materialien verwendet werden. Ein geeigneter Kleber ist beispielsweise Herberts Kleber 9524 mit Härter 507, Handelsprodukt Firma Herberts GmbH.

Das erfindungsgemäße Verfahren ermöglicht das Aufbringen der effektbeschichteten Folie auf stark dimensionierte Kunststoffsubstrate. Der zur Beschichtung der Folie verwendete erfindungsgemäße Effektbasislack zeichnet sich durch einen hohen Glanzgrad, einen guten Farbeffekt sowie eine gute Oberflächengüte aus.

Insbesondere bei Dehnungen der Folie und somit auch des Überzuges durch Aufbringen auf stark dimensionierte Kunststofformkörper, z.B. mit ausgeprägten Kanten, kann dies ohne negative Beeinflussung der Lackoberfläche erfolgen. Selbst starke Biegungen um Biegeradien von 300 mm und kleiner sind mit der erfindungsgemäß beschichteten Folie möglich, ohne daß Risse und optisch störende Dehnzonen auf der Lackoberfläche auftreten.

Die folgenden Beispiele sollen die Erfindung näher erläutern:

### Beispiel 1

### Herstellung einer weichen Polyurethan-Dispersion:

In einem 4-Liter-Reaktionsgefäß mit Rührer, Innenthermometer, Heizung und Rückflußkühler werden 769 g eines linearen Polyesters (aufgebaut aus Adipinsäure und Hexandiol-1,6 mit einer Hydroxylzahl von 75) mit 80 g N-Methylpyrrolidon auf 70°C erwärmt und bei dieser Temperatur 61,3 g Dimethylolpropionsäure zugesetzt. Der Ansatz wird auf 120°C erwärmt und eine halbe Stunde bei dieser Temperatur gerührt. Anschließend werden nach Abkühlen auf 70°C 204 g Hexamethylendiisocyanat zugesetzt. Es wird unter Rühren gewartet, bis die exotherme Reaktion abgeklungen ist und anschließend der Ansatz so lange bei 75°C gehalten, bis die Rest-Isocyanat-Zahl ca. 1,9 % beträgt. Die warme Harzmischung wird dann in ein Gemisch von 1700 g entionisiertem Wasser und 34,7 g Triethylamin unter starkem Rühren dispergiert. 5 Minuten nach Ende der Harzzugabe wird ein Gemisch von 17 g Propylendiamin-1,3 in 135 g entionisiertem Wasser zugesetzt und der Ansatz noch eine Stunde gerührt. Es entsteht eine schwach trübe, dünne, wäßrige Dispersion mit folgenden Kenndaten:
- Feststoffgehalt: ca. 35 Gew.-%
- Säurezahl : 25 (mg KOH/g Festharz)
- pH-Wert : 7,8

### Beispiel 2

### Herstellung eines erfindungsgemäßen Effektlackes:

300 Gewichtsteile der in Beispiel 1 beschriebenen PU-Dispersion werden in einem Edelstahlrührbehälter vorgelegt und unter Rühren mit einer Mischung versetzt, die zuvor aus 50 Gewichtsteile Effektpigmentzubereitung Hydrolac WH22NL (Handelsprodukt Fa. Eckart) und 50 Gewichtsteile Butylglykol hergestellt wurde. Es werden 40 Gewichtsteile Melaminharzlösung Cymel 325 (Handelsprodukt Fa. Cyanamid) unter Rühren zugefügt.

Eine weitere Mischung aus 22 Gewichtsteilen Butylglykol, 22 Gewichtsteile Wasser und 22 Gewichtsteile Verdicker Viscalex HV 30 (Handelsprodukt Fa. Allied Colloides) wird unter Rühren zugesetzt und der pH-Wert auf 7,5 bis 8 mit Dimethylethanolamin eingestellt. Anschließend wird mit Wasser auf eine Auslaufzeit von 35 sec. im Auslaufbecher nach DIN eingestellt.

### Beispiel 3

### Beschichten einer Tiefziehfolie:

Eine Polypropylenfolie Hostaprop (Handelsprodukt Fa. Hoechst) wird mit der blauen Flamme eines Bunsenbrenners in überlappenden Bahnen mit ca. 300 mm/sec. Geschwindigkeit überstrichen. Anschließend wird eine 5 %ige Lösung eines chlorierten Polyolefins der Fa. Eastman Typ 343-1 in Xylol aufgegossen, in senkrechter Position ablaufen gelassen und 10 Minuten bei Raumtemperatur getrocknet. Die derart geprimerte Folie wird mittels einer Becherlackierpistole in einer Schichtdicke von 15 *µ*m (bezogen auf getrockneten Film) mit dem Effektlack gemäß Beispiel 2 beschichtet und 5 Minuten bei 60°C getrocknet. Anschließend wird ein elastischer Klarlack Handelsprodukt R 47891 mit einer Schichtdicke von 25 *µ*m (bezogen auf getrockneten Film) aufgespritzt und 5 Minuten bei 23°C und danach 45 Minuten bei 80°C getrocknet.

### Beispiel 4

### Prüfung der Folie auf Dehnbarkeit:

Die gemäß Beispiel 3 erzeugte Folie wird in eine Tiefziehvorrichtung, bestehend aus zwei Metallringen mit Innendurchmesser von 50mm, derart eingelegt, daß sie fest zwischen den Ringen eingespannt ist. Rückseitig wird sodann eine Kugelkalotte (Halbkugel mit 20 mm Durchmesser) gegen die eingespannte Folie gedrückt und diese entsprechend verformt, bis die Spitze um 10 mm aus der ursprünglichen Folienebene hervorgetreten ist. Anschließend wird die Kugelkalotte innerhalb von 30 s zurückgezogen. Die Effektlackoberfläche ist im verformten Bereich im Vergleich mit dem unverformten von gleichartigem gleichmäßigem Aussehen und weist keine Risse auf. Nach einer Entlastungszeit von 10 min wird die permanente Verformung gemessen. Die Spitze der verformten Zone ragt weniger als 8 mm aus der Ebene des unverformten Bereiches hervor, was den teilweise elastischen Charakter der Verformung beweist.

### Beispiel 5

### Aufbringen der Folie auf ein Profilformteil:

Die gemäß Beispiel 3 beschichtete Folie wird auf der unbeschichteten Seite mit einer oxidierenden Gasflamme gleichmäßig überstrichen. Anschließend wird mit einer Lackspritzpistole eine Mischung aus Herberts Kaschierkleber 9524 und 5 Gew.-% des zugehörigen Härters 505 aufgebracht. Die derart vorbereitete Folie wird auf eine auf 100°C erhitzte Automobil-Seitenschutzleiste aus Bayflex 110 mit 20 % Glasfasern (im Handel für Reparaturzwecke erhältlich) unter Druck aufgebracht und in dieser Position 10 Minuten in einem Umluftofen bei einer Temperatur von 75°C belassen. Nach Abkühlen werden die Enden, die mit Endkappen versehen werden können, abgeschnitten. Das verbleibende Profil weist ein Aussehen entsprechend einer gleichmäßigen Metalliclackierung auf.

### Vergleichsbeispiel

### Beschichten einer Folie mit handelsüblichen Lacken:

Es wird verfahren wie in Beispiel 3, wobei aber anstelle des gemäß Beispiel 2 hergestellten Basislackes ein handelsüblicher Basislack "Starsilber" der Marke "Standox Autolacke" und ein 2-Komponenten-Klarlack "2K-Standocryl" der gleichen Marke verwendet wird.

### Prüfung der Folie gemäß Vergleichsbeispiel auf Verformbarkeit:

Es wird verfahren wie in Beispiel 4, wobei aber anstelle der gemäß Beispiel 3 beschichteten Folie diejenige entsprechend Vergleichsbeispiel verwendet wird. Beim Verformen entstehen dabei bereits Risse im Lackfilm, wenn die Spitze der Erhebung um weniger als 3 mm aus der Folienebene herausragt. Bei weiterem Verformen bilden sich Risse durch die gesamte Folie aus.

### Beispiel 6

### Hinterschäumen der lackbeschichteten Folie mit Polyurethanreaktionsformmasse:

In einem Umluftofen wird eine analog zu Beispiel 3 vorbeschichtete und zusätzlich auf der unbeschichteten Seite mit einer oxidierenden Gasflamme überstrichene Tiefziehfolie auf 150°C erhitzt.

Eine Versuchsform bestehend aus einem mit Flansch versehenen Zylinder von 1026 ml Volumen und einem weiteren Zylinder von 410 ml Volumen, der am Rand der Zylinderfläche mehrere Bohrungen und eine leichte Konizität aufweist, wird vorbereitet, indem das letztere Formteil mit einem handelsüblichen Trennmittel beschichtet und das erstere Formteil innen mit einer Stearinwachsschicht überzogen wird.

Darin werden 650 g Bayflex 70 und 440 g Desmodur PA 100 (beide Komponenten sind Handelsprodukte der Bayer AG), die zuvor miteinander vermischt wurden, eingefüllt und derart miteinander zur Reaktion gebracht, daß sobald Anzeichen einer Volumenvermehrung zu beobachten sind, die vorgewärmte Folie auf die Zylinderöffnung aufgelegt, der zweite Zylinder über den Flansch fest mit dem ersteren verbunden wird und die Vorrichtung umgedreht wird.

Nach Öffnen der Vorrichtung ist zu erkennen, daß die Folie sich unter Dehnung an die zylindrische Formwand angelegt hat und die entstandene Vertiefung fest mit Polyurethanschaum ausgefüllt ist. Trotz der Dehnung weist die beschichtete Folienoberfläche ein gleichmäßiges Aussehen entsprechend einer Metalliclackierung auf.

### Beispiel 7

Analog zu Beispiel 2 wird ein Effektlack hergestellt, wobei aber statt 300 Gewichtsteilen der Dispersion gemäß Beispiel 1 nun 350 g und statt 40 Gewichtsteile Cymel 320 nun 30 Gewichtsteile eingesetzt werden.

Analog zu Beispiel 3 wird mit diesem Effektlack eine Tiefziehfolie beschichtet, wobei diese anstelle Hostaprop aus Hifax CA 10A (Handelsprodukt Fa. Montell GmbH, Bayreuth) besteht.

Bei einer Prüfung gemäß Beispiel 4 weist die Folie eine bleibende Verformung von ca. 6,5 mm auf.

Die beschichtete Folie wird in einem Umluftofen auf 90°C erhitzt. Es wird eine evakuierbare zylindrische Versuchsform von 100 mm Durchmesser und 50 mm Tiefe vorbereitet, die eine offene Seite mit einer Ausflanschung und eine geschlossene Seite mit einer Vakuum-Absaugöffnung aufweist. Die vorerhitzte Folie wird auf eine Zylinderöffnung aufgelegt und mit einem Flanschring sicher befestigt. Anschließend wird der Zylinder sofort mittels einer Vakuumpumpe evakuiert, bis die Folie sich an die Absaugöffnung angelegt hat. Nach Abkühlen der Folie auf 30°C wird die Vorrichtung belüftet. Die Folie hat sich bleibend zylinderförmig verformt und weist auf der beschichteten Seite ein gleichmäßiges Aussehen entsprechend einer Metalliclackierung auf.

## Patentansprüche

1. Polymerfolie, die mit einem Lack beschichtet worden ist, der Bindemittel, Effektpigment, organisches Lösemittel und Wasser enthält, **dadurch gekennzeichnet, daß** der Lack
18 bis 45 Gew.-% einer Bindemittelkombination,
0,1 bis 10 Gew.-% plättchenförmiges Aluminium- und/oder Glimmereffektpigment,
0 bis 15 Gew.-% Farbpigment,
3 bis 20 Gew.-% organische Lösemittel und
50 bis 76,9 Gew.-% Wasser enthält,
wobei die Summe der Bestandteile 100 Gew.-% beträgt und wobei die Bindemittelkombination
A) 10 bis 70 Gew.-% Polyurethanharz,
B) 5 bis 40 Gew.-% Melaminharz,
C) 0 bis 60 Gew.-% weitere Bindemittel und
D) 0 bis 6 Gew.-% Verdicker enthält,
wobei die Summe der Komponenten A) bis D) 100 Gew.-% beträgt.

2. Polymerfolie nach Anspruch 1, **dadurch gekennzeichnet, daß** der Verdicker ein Acrylharz- oder Polyvinylalkoholverdicker ist.

3. Polymerfolie nach Anspruch 1 oder 2, **dadurch gekennzeichnet, daß** der Anteil des Verdickers an der Bindemittelkombination 0,1 bis 3 Gew.-% beträgt.

4. Polymerfolie nach einem oder mehreren der Ansprüche 1 bis 3, **dadurch gekennzeichnet, daß** sie nach einer Tiefungsprüfung gemäß DIN-ISO 1520 nach einer Verformung von 10 mm Tiefe und anschließender Entlastung eine permanente Verformung von 4,5 bis 8 mm Tiefe mit rißfreier Beschichtung aufweist.

5. Verfahren zum Aufbringen der Polymerfolie nach einem oder mehreren der Ansprüche 1 bis 4 auf einen Formkörper, **dadurch gekennzeichnet, daß** die Polymerfolie mittels eines Klebstoffs auf den Formkörper aufgeklebt wird.

6. Verfahren nach Anspruch 5, **dadurch gekennzeichnet, daß** die Folie unter Verwendung eines Klebstoffs im Vakuumtiefziehverfahren auf den Formkörper aufgebracht wird.

7. Verfahren zum Aufbringen der Polymerfolie nach einem oder mehreren der Ansprüche 1 bis 4 auf eiren Formkörper, **dadurch gekennzeichnet, daß** die Polymerfolie unter Verwendung einer Form mit einer aushärtenden Formmasse hinterspritzt wird.

## Claims

1. Polymer film that has been coated with a lacquer containing binder, effect pigment, organic solvent and water, **characterised in that** the lacquer contains
from 18 to 45 wt.% of a binder combination,
from 0.1 to 10 wt.% plate-like aluminium and/or mica effect pigment,
from 0 to 15 wt.% colouring pigment,
from 3 to 20 wt.% organic solvents, and
from 50 to 76.9 wt.% water,
the sum of the constituents being 100 wt.% and the binder combination containing
A) from 10 to 70 wt.% polyurethane resin,
B) from 5 to 40 wt.% melamine resin,
C) from 0 to 60 wt.% further binders, and
D) from 0 to 6 wt.% thickener,
the sum of components A) to D) being 100 wt.%.

2. Polymer film according to claim 1, **characterised in that** the thickener is an acrylic resin thickener or a polyvinyl alcohol thickener.

3. Polymer film according to claim 1 or 2, **characterised in that** the proportion of thickener in the binder combination is from 0.1 to 3 wt.%.

4. Polymer film according to one or more of claims 1 to 3, **characterised in that** it exhibits a permanent deformation of a depth of from 4.5 to 8 mm, with a crack-free coating, according to a cupping test according to DIN-ISO 1520 following a deformation having a depth of 10 mm and subsequent release.

5. Method of applying the polymer film according to one or more of claims 1 to 4 to a moulded body, **characterised in that** the polymer film is bonded to the moulded body by means of an adhesive.

6. Method according to claim 5, **characterised in that** the film is applied to the moulded body by the vacuum forming method using an adhesive.

7. Method of applying the polymer film according to one or more of claims 1 to 4 to a moulded body, **characterised in that** a hardening moulding composition is applied to the back of the polymer film by spraying using a mould.

## Revendications

1. Film en polymère revêtu d'un vernis contenant des agents liants, des pigments fantaisie, un solvant organique et de l'eau, **caractérisé en ce que** le vernis contient :
entre 18 et 45 % massiques d'une combinaison d'agents liants,
entre 0,1 et 10 % massiques de pigments à effet brillant et/ou aluminium en forme de paillettes,
entre 0 et 15 % massiques d'un pigment coloré,
entre 3 et 20 % massiques d'un solvant organique et
entre 50 et 76,9 % massiques d'eau,
la somme des ingrédients étant égale à 100 % massiques et la combinaison d'agents liants contenant :
de 10 à 70 % massiques de résine de polyuréthane,
de 5 à 40 % massiques de résine de mélamine,
de 0 à 60 % massiques d'autres agents liants et
de 0 à 6 % massiques d'épaississants,
la somme des composants A) à D) étant égale à 100 % massiques.

2. Film en polymère selon la revendication 1, **caractérisé en ce que** l'épaississant est un épaississant à base de résine acrylique ou à base d'alcool polyvinylique.

3. Film en polymère selon la revendication 1 ou 2, **caractérisé en ce que** le pourcentage d'épaississant dans la combinaison d'agents liants est situé entre 0,1 et 3 % massiques.

4. Film en polymère selon l'une ou plusieurs des revendications 1 à 3, **caractérisé en ce qu'**il présente un formage permanent de 4,5 à 8 mm de profondeur sans fissures sur le revêtement au contrôle d'emboutissage selon la norme DIN ISO 1520 après un formage de 10 mm de profondeur et une détente finale.

5. Procédé d'application du film en polymère selon l'une ou plusieurs des revendications 1 à 4 sur une pièce moulée, **caractérisé en ce que** le film en polymère est collé sur la pièce moulée avec une colle.

6. Procédé selon la revendication 5, **caractérisé en ce que** le film est appliqué sur la pièce moulée en utilisant une colle dans un procédé d'emboutissage sous vide.

7. Procédé d'application du film en polymère selon l'une ou plusieurs des revendications 1 à 4 sur une pièce moulée, **caractérisée en ce que** le film en polymère est ensuite rempli par injection de matière moulée durcissante en utilisant un moule.
